# EUROPÄISCHE PATENTSCHRIFT

(11) **EP 1 905 732 B1**
(45) Veröffentlichungstag und Bekanntmachung des Hinweises auf die Patenterteilung: **01.04.2009**
(21) Anmeldenummer: 06020079.7
(22) Anmeldetag: 26.09.2006
(51) Int. Cl.: B67D 5/08, G05B 19/042, H04L 29/12

(54) **Verfahren zur automatischen Zuordnung von Sensoren**
Method for automatic allocation of sensors
Procédé destiné à l'affectation automatique de capteurs

(43) Veröffentlichungstag der Anmeldung: 02.04.2008
(73) Patentinhaber: Scheidt & Bachmann GmbH, D-41238 Mönchengladbach (DE)
(72) Erfinder: Miller, Norbert, 41063 Mönchengladbach (DE); Claßen, Dieter, 41235 Korschenbroich (DE)
(74) Vertreter: Stenger, Watzke & Ring

(56) Entgegenhaltungen:
- EP-A- 0 974 940
- EP-A- 1 338 446
- WO-A-20/04082243
- LU-A1- 90 805
- US-A1- 5 519 878

## Beschreibung

Die vorliegende Erfindung betrifft ein Verfahren zur automatischen Zuordnung von Systemsensoren zu einem Systembereich in einem Zentralrechner überwachten System mit wenigstens zwei Systembereichen.

Bei einer Vielzahl von Vorgängen sind Gesamtsysteme in Systembereiche unterteilt, die im Prinzip alle gleichartig, gegebenenfalls parallel und/oder redundant arbeiten.

Ein Einsatzbeispiel der vorliegenden Erfindung ist der Einsatz an einem Kraftstoffausgabesystem an einer Tankstelle. Beispielsweise sind im Bereich einer Tanksäule unterschiedliche Kraftstoffarten auszugeben, wie Diesel, Benzin usw.. Jede der Kraftstoffarten definiert einen Systembereich. Das System verfügt über einen Zentralrechner. Dieser stellt beispielsweise fest, welche der Kraftstoffarten gerade ausgegeben wird, also welcher Systembereich gerade im Einsatz ist. Der Zentralrechner wertet auch die erforderlichen Sensoren aus, wobei es sich beispielsweise um Drucksensoren, Temperatursensoren und dergleichen handeln kann.

Im Stand der Technik wird üblicherweise so vorgegangen, daß eine solche Anlage erstellt wird. Die Sensoren haben typbezogene Kennungen, d. h., sie identifizieren durch ihre Kennung, um welche Art von Sensor es sich dabei handelt. Ansonsten identifizieren sie sich zunächst mit einer allgemeinen Adresse. Bei herkömmlichen Systemen wird einfach ein Sensor auf einen bestimmten Anschlußpol einer Platine durchgeschleift und der Rechner greift schlichtweg auf diese Schnittstelle zu, um das gewünschte Sensorsignal zu erhalten und auswerten zu können.

Bei BUS-Systemen gehen sämtliche Sensoren auf einen BUS. Hier findet die Zuordnung bei der Initialisierung üblicherweise derart statt, daß mittels einer Software im Zentralrechner der jeweilige für den Systembereich vorgesehene Sensor identifiziert wird, so daß eine feste Adresse durch die manuelle Zuordnung vergeben wird. Der Rechner legt sozusagen ein Adreßverzeichnis an und speichert dieses, fragt also je nach in Betrieb befindlichen Systembereichen die zugeordneten Adressen der zugeordneten Sensoren ab.

Die EP 1 338 446 A beschreibt eine Vorrichtung zur Einholung von Reifeninformationen eines Fahrzeugs und eine Vorrichtung zur Verarbeitung dieser Reifeninformationen. Jeder Reifen ist mit einer lokalen Einheit versehen, die Reifenzustandssensoren, eine Sendeantenne zum Übersenden der von den Sensoren detektieren Reifeninformationen an eine zentrale Einheit und einen Reifeninformationserzeuger zur Erzeugung eines Reifendatensatzes aufweist. Durch diese Anordnung lässt sich zum einen beispielsweise der Druck oder die Temperatur der Reifen feststellen und zum anderen eine Unterscheidung zwischen den montierten Reifen und dem Ersatzreifen treffen.

Die LU 90 805 A1 offenbart ein Verfahren zur Zuordnung einer Adresse zu einem Aktuator. Dabei wird einem Aktuator eine Adresse zugeordnet, die aus einer Nachschlagetabelle abgeleitet ist, welche Nachschlagetabelle eine Liste von von Paaren von Auslenkungslängen des Aktuators und entsprechende Adresswerte aufweist. Dadurch können auch identischen, in dem System befindlichen Aktuatoren individuelle Adressen zugeordnet werden.

Nachteilig ist bei den bekannten Systemen, daß die Sensor-/Adreßzuordnung nach der manuellen Eingabe fixiert ist. Fällt beispielsweise ein Sensor aus, so muß dieser ausgetauscht werden. Der manuelle Adressierungsvorgang muß wiederholt werden, so daß das System insgesamt zumindest nachzuinitialisieren ist.

Werden beispielsweise zusätzliche Sensoren in bestehende Systeme nachgerüstet und deren Systembereichen zugeordnet, so muß von dem Zentralrechner wiederum jeder Sensor identifiziert, adressiert und dem Systembereich zugeordnet werden.

Derartige Auswechsel- und/oder Nachrüstarbeiten müssen also von hoch qualifizierten Technikern, die sowohl Sensoren handwerklich austauschen als auch softwareseitig initialisieren können, oder von Teams durchgeführt werden.

Der vorliegenden Erfindung liegt die **Aufgabe** zugrunde, ein Verfahren zur automatisierten Zuordnung von Sensoren zu Systembereichen in einem Zentralrechner gesteuerten bzw. Zentralrechner überwachten System bereitzustellen.

Zur technischen **Lösung** dieser Aufgabe wird ein Verfahren mit den Merkmalen des Patentanspruches 1 vorgeschlagen. Weitere Vorteile und Merkmale ergeben sich aus den Unteransprüchen.

Gemäß Patentanspruch 1 wird ein Verfahren zur automatischen Zuordnung eines Systemsensors zu einem Systembereich in einem Zentralrechner überwachten System mit wenigstens zwei Systembereichen vorgeschlagen, dadurch gekennzeichnet, daß
- der Zentralrechner im System vorhandene Systemsensoren erfaßt und identifiziert,
- der Zentralrechner erfaßt, welcher Systembereich im Augenblick in Betrieb ist,
- der Zentralrechner durch den Betrieb des Systembereiches sich ergebene Änderungen von Betriebswerten der Systemsensoren erfaßt, und
- anhand der Änderungen von Betriebswerten des jeweiligen Systemsensors diesen Systemsensor dem in Betrieb befindliche Systembereich automatisch zuordnet, wobei das erfindungsgemäße Verfahren in einem System zur Waren-/Produktausgabe angewandt wird, wobei die unterschiedlichen Systembereiche durch unterschiedliche Waren/Produkte gebildet werden.

Der wesentliche Vorteil des erfindungsgemäßen Verfahrens ist, daß eine automatische Adreßzuordnung von Sensoren durch den Zentralrechner erfolgt, somit ein manueller Adressierungsvorgang entfällt und zudem die Adreßzuordnung nicht fixiert ist. Durch diese Überwachung des Systems mittels eines Zentralrechners, ist bei eventuellen Auswechsel- und/oder Nachrüstarbeiten kein hochqualifiziertes Personal nötig, wodurch die Betriebskosten eines solchen Systems deutlich gesenkt werden.

Erfindungsgemäß erfaßt der Zentralrechner die im System vorhandenen Sensoren und identifiziert diese zum Beispiel anhand der typbedingten Kennung. Weiterhin erfaßt der Zentralrechner, welcher Systembereich im Augenblick in Betrieb ist, und die sich durch diesen Betrieb ergebende Änderungen der Systemsensoren. Danach wird anhand der Änderungen des jeweiligen Sensors dieser Sensor dem in Betrieb befindlichen Systembereich automatisch zugeordnet. Das Verfahren wird durchlaufen, wenn der Zentralrechner die im System vorhandenen Sensoren erfaßt, diese Erfassung mit abgespeicherten Adressen der Sensoren vergleicht und feststellt, daß Sensoren im System vorhanden sind, denen keine Adresse zugeordnet ist.

Eine vorteilhafte Ausgestaltung der Erfindung sieht vor, daß die Zuordnung gespeichert wird. Dadurch liegt die Zuordnung bei folgenden Anwendungen des Gesamtsystems vor, so daß ein direkter Zugriff auf die gespeicherten Daten erfolgen kann, und kein erneuter Ablauf des Verfahrens bezüglich der vorgenommenen Zuordnungen nötig ist, solange keine Änderung hinsichtlich der Sensoren vorliegt. Sobald der Sensor ein Signal an den Zentralrechner sendet, erkennt dieser den zugehörigen in Betrieb befindlichen Systembereich, und umgekehrt, und kann weitere Datenverarbeitungen vollziehen.

Nach einer weiteren vorteilhaften Ausgestaltung der Erfindung weist der Zentralrechner dem identifizierten und zugeordneten Sensor eine eindeutige Adresse zu. Dadurch wird im Zentralrechner ein Adreßverzeichnis angelegt, so daß je nach Betrieb eines Systembereiches die zugeordnete Adresse des zugeordneten Sensors abgerufen werden kann.

Eine weitere vorteilhafte Ausgestaltung der Erfindung sieht vor, daß das Verfahren in einem System zur Ausgabe von Kraftstoffen angewandt wird, wobei die unterschiedlichen Systembereiche durch die unterschiedlichen Kraftstoffe identifiziert werden.

Nach einer weiteren vorteilhaften Ausgestaltung der Erfindung werden als Sensoren Temperatursensoren eingesetzt. Diese können zum Beispiel bei Systemen zur Ausgabe von Kraftstoffen Temperaturänderungen bei Ausgabe feststellen, wodurch der Zentralrechner eine Zuordnung des Sensors zu der entsprechenden durch einen Systembereich ausgegebenen Kraftstoffsorte vollziehen kann.

Eine weitere vorteilhafte Ausgestaltung der Erfindung sieht vor, daß das Verfahren bei Inbetriebnahme eines Systems und nach jedem Sensorwechsel durchgeführt wird. Dadurch wird jedesmal ein neues Adreßverzeichnis angelegt, welches den Änderungen im Gesamtsystem Rechnung trägt. Zudem ist kein hochqualifiziertes Personal notwendig, welches die Änderungen am Gesamtsystem manuell eingibt, so daß die Betriebskosten eines das Verfahren aufweisenden Systems gesenkt werden.

Weitere Vorteile und Merkmale der Erfindung werden im Folgenden anhand der Figuren beschrieben. Dabei zeigt
- Fig. 1: ein Ausführungsbeispiel für das erfindungsgemäße Verfahren, und
- Fig. 2: ein Ausführungsbeispiel eines mit dem erfindungsgemäßen Verfahren betriebenen System.

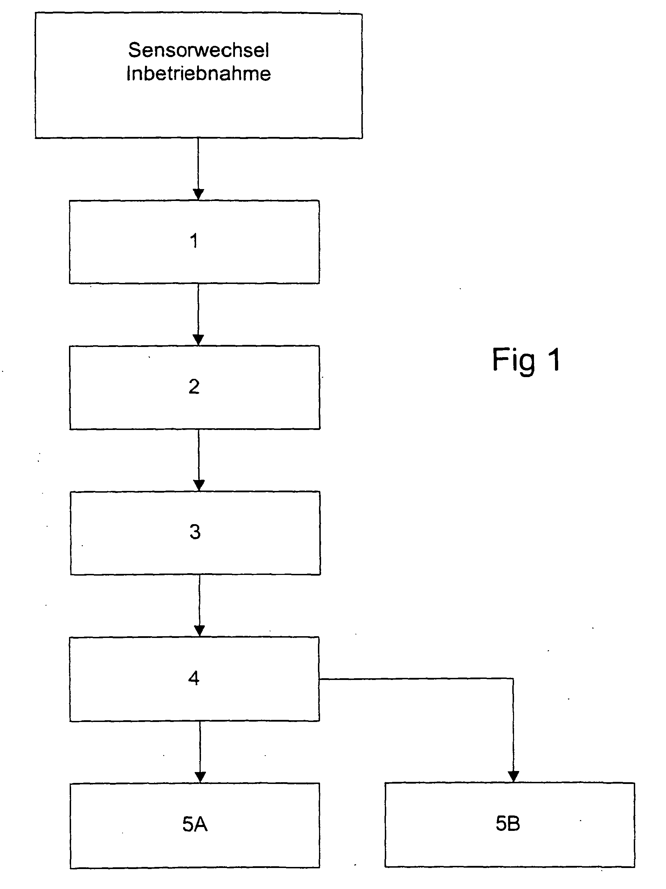

Fig. 1 zeigt ein Schema des Verfahrensablaufs. Das Verfahren wird angewandt, wenn in dem verwendeten Gesamtsystem ein Sensorwechsel erfolgt ist oder dieses System in Betrieb genommen wird. Zu diesem Zeitpunkt liegen keine Zuordnungen von Sensoren zu Systembereichen vor, auf die der Zentralrechner zugreifen könnte. Dann folgt im Schritt 1 die Erfassung von im System vorhandenen Sensoren und deren Identifizierung anhand der typbedingten Kennung. Als nächstes erfolgt in Schritt 2 die Erfassung des im Augenblick in Betrieb befindlichen Systembereiches, dem zum Beispiel eine bestimmte Kraftstoff- oder Produktausgabe zugeordnet ist. In Schritt 3 erfolgt die Erfassung von Änderungen an einem Sensor, die durch den Betrieb des zugehörigen Systembereiches erzeugt werden. In Schritt 4 erfolgt durch den Zentralrechner die Zuordnung des Sensors, an dem Änderungen festgestellt wurden, zu dem zugehörigen Systembereich, welcher sich im Augenblick in Betrieb befindet. Im darauf folgenden Schritt 5A erfolgt das Abspeichern der in Schritt 4 erstellten Zuordnung, welche bis zur nächsten Inbetriebnahme oder zum nächsten Sensorwechsel als Basis zur weiteren Datenverarbeitung dient. Zudem weist der Zentralrechner in Schritt 5B dem identifizierten und zugeordneten Sensor eine eindeutige Adresse zu, die bei einem in Betrieb befindlicher Systembereich bei Verwendung der abgespeicherten Zuordnung direkt abgerufen werden kann, wonach eine weitere Datenverarbeitung durch den Zentralrechner erfolgen kann. Weiterhin ist es möglich, daß die Schritte 2 und 3 zeitlich vertauscht werden oder parallel erfolgen.

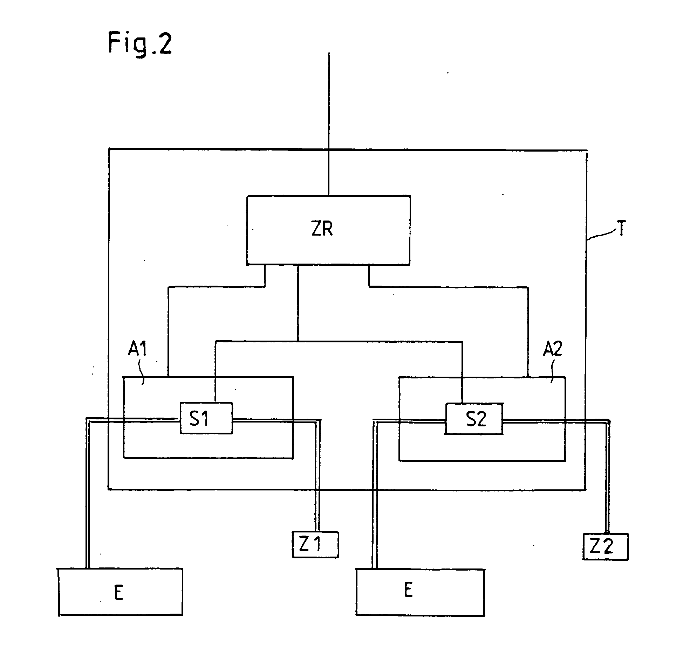

Fig. 2 zeigt ein Anwendungsbeispiel für das erfindungsgemäße Verfahren. In diesem Beispiel ist ein Zentralrechner ZR über elektrische Leitungen mit zwei Systembereichen A1 und A2 verbunden, welche sich in einer Tanksäule T befinden. Ein Systembereich A1 weist eine Ausgabeeinheit Z1 für Benzin, der andere Systembereich A2 eine Ausgabeeinheit Z2 für Diesel auf, wobei die Ausgabeeinheiten Z1 und Z2 hier Zapfpistolen sind. Weiterhin sind die Ausgabeeinheiten Z1 und Z2 über Schläuche zur Ausgabe der Flüssigkeiten mit zwei Sensoren S1 und S2 verbunden, welche wiederum über elektrische Leitungen mit dem Zentralrechner ZR verbunden sind, und die in dieser Ausführung Temperatursensoren sind. Wird nun dieses System zur Ausgabe eines Kraftstoffs in Betrieb genommen, oder wurde einer der Sensoren S1 und/oder S2 ausgewechselt, muß zuerst von dem Zentralrechner ZR eine Erfassung und Identifizierung der in System vorhandenen Sensoren S1 und S2 erfolgen. Wird nun an der Ausgabeeinheit Z1 des Systembereichs A1 Benzin entnommen, so wird der Betrieb dieses Systembereichs A1 von dem Zentralrechner ZR erfaßt. Weiterhin wird bei der Benzinausgabe durch den Flüssigkeitsstrom eine Temperaturänderung an dem Sensor S1 erzeugt, welche ebenfalls von dem Zentralrechner ZR erfaßt wird. Dieser ordnet nun den Sensor S1 dem Systembereich A1 zu, speichert diese Zuordnung ab und weist dem Sensor S1 gleichzeitig eine eindeutige Adresse zu. Wird nun der Systembereich A1 1 im Folgenden betrieben, so kann über die abgespeicherte Zuordnung die Adresse des zugehörigen Sensors S1 abgerufen werden. Ist keine Adresse zugeordnet, so erfaßt der Zentralrechner den im Augenblick des Betriebs Temperaturänderungen signalisierenden Sensor und ordnet diesen dem im Augenblick betriebenen Systembereich zu. So wird nach und nach ein Adreßverzeichnis aller Sensoren angelegt, welches Verwendung findet, bis ein Sensorwechsel oder eine erneute Inbetriebnahme erfolgt, wonach das Verfahren von vorne beginnt, bis alle Zuordnungen stattgefunden haben.

### Bezugszeichenliste

- A1: Systembereich für Benzin
- A2: Systembereich für Diesel
- T: Tanksäule
- S1: Sensor der Benzinausgabe
- S2: Sensor der Dieselausgabe
- ZR: Zentralrechner
- Z1: Ausgabeeinheit für Benzin
- Z2: Ausgabeeinheit für Diesel
- E: Erdtank

## Patentansprüche

1. Verfahren zur automatischen Zuordnung eines Systemsensors zu einem Systembereich (A1, A2) eines mittels eines Zentralrechners (ZR) überwachten Systems mit wenigstens zwei Systembereichen (A1, A2),
**dadurch gekennzeichnet, daß**
- der Zentralrechner (ZR) im System vorhandene Systemsensoren (S1, S2) erfasst und identifiziert,
- der Zentralrechner (ZR) erfasst, welcher Systembereich (A1, A2) im Augenblick in Betrieb ist,
- der Zentralrechner (ZR) durch den Betrieb des Systembereichs (A1, A2) sich ergebene Änderungen von Betriebswerten der Systemsensoren (S1, S2) erfasst, und
- anhand der Änderungen von Betriebswerten der Systemsensoren (S1, S2) einen der Systemsensoren (S1, S2) dem in Betrieb befindlichen Systembereich (A1, A2) automatisch zuordnet,
- wobei das Verfahren in einem System zur Waren- und/oder Produktausgabe angewandt wird, wobei die unterschiedlichen Systembereiche (A1, A2) durch unterschiedliche Waren und/oder Produkte gebildet werden.

2. Verfahren nach Anspruch 1, **dadurch gekennzeichnet, dass** die Zuordnung gespeichert wird.

3. Verfahren nach einem der vorhergehenden Ansprüche, **dadurch gekennzeichnet, dass** der Zentralrechner (ZR) dem identifizierten und zugeordneten Systemsensor (S1, S2) eine eindeutige Adresse zuweist.

4. Verfahren nach einem der vorhergehenden Ansprüche, **dadurch gekennzeichnet, dass** dieses in einem System zur Ausgabe von Kraftstoffen angewandt wird, wobei die unterschiedlichen Systembereiche (A1, A2) durch die unterschiedlichen Kraftstoffe identifiziert werden.

5. Verfahren nach einem der vorhergehenden Ansprüche, **dadurch gekennzeichnet, dass** als Systemsensoren (S1, S2) Temperatursensoren eingesetzt werden.

6. Verfahren nach einem der vorhergehenden Ansprüche, **dadurch gekennzeichnet, dass** dieses bei Inbetriebnahme eines Systems und nach jedem Sensorwechsel durchgeführt wird.

## Claims

1. Method for automatic allocation of a system sensor to a system area (A1, A2) of a system supervised by a central processor (ZR) and comprising at least two system areas (A1, A2),
**characterized in that**
- the central processor (ZR) detects and identifies system sensors (S1, S2) present in the system,
- the central processor (ZR) detects which system area (A1, A2) is currently in operation,
- the central processor (ZR) detects changes of operation parameters of the system sensors (S1, S2) resulting from the operation of the system area (A1, A2) and,
- based on changes of operation parameters of the system sensors (S1, S2), automatically allocates one of the system sensors (S1, S2) to the system area (A1, A2) currently in operation,
- wherein the method is applied in a system for dispensing wares and/or products, wherein the different system areas (A1, A2) are formed by different wares and/or products.

2. Method according to claim 1, **characterized in that** the allocation is memorized.

3. Method according to one of the preceding claims, **characterized in that** the central processor (ZR) assigns a unique address to the identified and allocated system sensor (S1, S2).

4. Method according to one of the preceding claims, **characterized in that** the same is applied in a fuel dispensing system, wherein the different system areas (A1, A2) are identified through the different fuels.

5. Method according to one of the preceding claims, **characterized in that** temperature sensors are employed as system sensors (S1, S2).

6. Method according to one of the preceding claims, **characterized in that** the same is carried out at the start-up of a system and after each exchange of a sensor.

## Revendications

1. Procédé pour l'assignation automatique d'un déctecteur de système à une zone de système (A1, A2) d'un système surveillé au moyen d'un ordinateur central (ZR) avec au moins deux zones de système (A1, A2),
**caractérisé en ce que**
- l'ordinateur central (ZR) détecte et identifie des détecteurs de système (S1, S2) qui existent dans le système,
- l'ordinateur central (ZR) détecte quelle zone de système (A1, A2) est en service au moment,
- l'ordinateur central (ZR) détecte des changements de valeurs de fonctionnement des détecteurs du système (S1, S2) qui résultent du fonctionnement de la zone du système (A1, A2) et
- assigne, à l'aide des changements de valeurs de fonctionnement des détecteurs de système (S1, S2), l'un des détecteurs de système (S1, S2) automatiquement à la zone de système (A1, A2) qui est en service,
- le procédé étant appliqué dans un système pour la sortie de marchandises et/ou de produits, les différentes zones de système (A1, A2) étant formées par différentes marchandises et/ou produits.

2. Procédé selon la revendication 1, **caractérisé en ce que** l'assignation est mémorisée.

3. Procédé selon l'une des revendications précédentes, **caractérisé en ce que** l'ordinateur central (ZR) affecte une adresse univoque au détecteur du système (S1, S2) identifié et assigné.

4. Procédé selon l'une des revendications précédentes, **caractérisé en ce que** celui-ci est appliqué dans un système pour la sortie de carburants, les différentes zones du système (A1, A2) étant identifiées par les différents carburants.

5. Procédé selon l'une des revendications précédentes, **caractérisé en ce que** des détecteurs de température sont utilisés comme détecteurs de système (S1, S2).

6. Procédé selon l'une des revendications précédentes, **caractérisé en ce que** celui-ci est exécuté lors de la mise en service d'un système et après chaque changement de détecteur.
